# EUROPÄISCHE PATENTANMELDUNG

(11) **EP 1 508 739 A1**
(43) Veröffentlichungstag der Anmeldung: **23.02.2005**
(21) Anmeldenummer: 04018078.8
(22) Anmeldetag: 30.07.2004
(51) Int. Cl.: F16L 47/34

(54) **Vorrichtung zum Schneiden einer Kreisöffnung in ein Kunststoffrohr**

(30) Priorität: 16.08.2003 DE 10337655
(71) Anmelder: GARDENA Manufacturing GmbH, 89079 Ulm (DE)
(72) Erfinder: Schiedt, Christoph, 88483 Burgrieden (DE)

(57) **Zusammenfassung**

Für eine Vorrichtung zum Ausschneiden einer kreisförmigen Öffnung in die Wandung eines Kunststoffrohres einer Bewässerungsanlage mittels einer drehbaren Messerhülse wird vorgeschlagen, Schneiden der Messerhülse mit im wesentlichen zur Drehachse parallelen Schneidkanten vorzusehen.

## Beschreibung

Die Erfindung betrifft eine Vorrichtung zum Schneiden einer Kreisöffnung in ein Kunststoffrohr.

Derartige Vorrichtungen sind insbesondere in Wasserverteilsystemen, z. B. Bewässerungssystemen eingesetzt, um an Kunststoffrohren nachträglich an durch den Benutzer wählbaren Positionen Abzweigleitungen oder Verbrauchseinrichtungen anzuschließen.

Aus der EP 0 723 104 B1 und der EP 0 754 900 B1 sind derartige Vorrichtungen bekannt, wobei eine Manschette mit einem Gehäuse auf dem Rohr festgeklemmt wird. Das Gehäuse enthält eine Gewindehülse mit einem Gewinde um eine senkrecht zur Rohrachse verlaufende Drehachse. In der Gewindehülse ist ein Bolzen mit einem Gewindeschaft drehbar geführt, welcher an seinem dem Rohr zugewandten Seite eine mitgedrehte Messerhülse trägt, die ihrerseits dem Rohr zugewandt an ihrer Stirnfläche eine kreisringförmige geschliffene Schneide aufweist. Durch Drehen des nach außen ragenden Bolzens mit einem Werkzeug wird die Messerschneide unter gleichzeitiger Drehung um die Drehachse gegen das Kunststoffrohr gedrückt, um mit der Kreisringschneide in den Rohrmantel einzudringen und eine Kreisscheibe aus dem Rohr auszuschneiden. Die Kreisscheibe soll dabei in die Messerhülse eingedrückt werden und beim Zurückdrehen des Bolzens mit der Messerhülse zurückgezogen werden, so dass eine Öffnung im Rohrmantel freigegeben wird. In der Praxis zeigt sich, dass teilweise Kunststoffspäne oder die gesamte ausgeschnittene Scheibe in dem Rohr zurückbleiben und den Wasserfluss im Leitungssystem behindern können.

Bei einer aus der DE 196 23 004 A1 bekannten Ventil-Anbohrarmatur ist eine kreisringförmige Schneide an der Stirnfläche einer zylindrischen drehbaren Schneidhülse ausgebildet, wobei die Schneidhülse in ihrem die Schneide aufweisenden Endabschnitt geringfügig konisch verjüngt ist, wodurch ein in die Schneidhülse eingedrückter, aus dem Kunststoffrohr ausgeschnittener Kreisabschnitt am Ausfallen aus dem Rohr gehindert wird. Bei einer aus der CH 416 236 bekannten Anbohrschelle sind die mehreren Schneidzähne einer segmentierten Schneidhülse zu ihren Spitzen hin in Richtung der Drehachse geneigt, so dass eine konische Mantelscheibe aus dem Rohr ausgeschnitten und im Schneidkopf festgehalten wird.

Aus der DE 195 03 602 A1, dortige Fig. 13, ist eine Ausführung Anbohrvorrichtung für Kunststoff-Rohrleitungen bekannt, bei welcher eine drehbare Schneidbuchse durch axiale Einschnitte von der Stirnseite her in mehrere um die Drehachse gruppierte Schneidzähne unterteilt ist. Die axial dem Rohr zuweisenden Stirnkanten der Zähne verlaufen leicht gegen eine senkrecht zur Drehachse liegende Ebene geneigt und zur Ausbildung von Schneidkanten profiliert. Die Innenwand der Zähne weist ein Innengewinde auf, welches eine ausgeschnittene Rohrmantelscheibe festhält. Eine entsprechende Vorrichtung ist aus der DE 20 35 667 oder der EP 0 829 673 A1 bekannt.

Die DE 25 36 000 C2 zeigt eine Anbohrvorrichtung, bei welcher an der Stirnfläche ein Profil mit zwei axial vorstehenden Zähnen und gegen die zurückversetzt weiter strukturierte Randbogenflächensegmente. Die axialen Stirnflächen der Zähne weise eine V-förmige Aussparung zur Verminderung der Reibung auf.

Bei einer aus der US 5.105.844 bekannten Vorrichtung weist die Schneidkante abwechselnd axial steigende und fallende Abschnitte auf. Eine aus der US 3.905.718 bekannte Schneidvorrichtung fördert einen beim Schneiden geschälten Span ins Innere der Schneidhülse.

Der vorliegenden Erfindung liegt daher die Aufgabe zugrunde, eine Vorrichtung zum Schneiden einer Kreisöffnung in ein Kunststoffrohr anzugeben, welche ein verbessertes Verhalten beim Schneidvorgang zeigt.

Die Erfindung ist im Patentanspruch 1 beschrieben. Die abhängigen Ansprüche enthalten vorteilhafte Ausgestaltungen und Weiterbildungen der Erfindung.

Durch die Ausrichtung der wenigstens einen Schneidkante annähernd parallel zur Drehachse der Messerhülse verläuft die von der Schneidhülse auf das Kunststoffrohr ausgeübte Kraft überwiegend parallel zur Oberfläche des Kunststoffrohrs, in welches eine Öffnung geschnitten werden soll. Insbesondere wird ein Überwiegen einer Kraftkomponente parallel zur Drehachse in Richtung der Rohrachse vermieden, welche das Eindrücken von Spänen oder der gesamten ausgeschnittenen Scheibe ins Innere des Kunststoffrohrs begünstigen könnte. Die Abweichung der Ausrichtung der Schneidkante von einer zur Drehachse der Messerhülse parallelen Richtung beträgt vorzugsweise weniger als 30°, insbesondere weniger als 15°.

Vorteilhafterweise sind mehrere Schneidkanten, vorzugsweise um gleiche Winkel um die Drehachse der Messerhülse gegeneinander versetzt, an dem dem Kunststoffrohr zugewandten Ende der Messerhülse vorgesehen. Die Zahl der Schneidkanten beträgt vorteilhafterweise maximal sechs, insbesondere maximal vier.

Die Schneidkanten sind vorteilhafterweise angeschliffen auf eine gegenüber der Wandstärke der Messerhülse geringe Schneidkantenbreite. Die Schneidkanten sind vorteilhafterweise radial gegen die Wandmitte der Messerhülse nach außen versetzt angeordnet. Insbesondere kann eine Schneidflanke durch die Außenmantelfläche der Messerhülse und eine von der Innenmantelfläche schräg nach außen verlaufende Keilfläche gebildet sein. Hierdurch wird vorteilhafterweise das Kunststoffrohr der auszuschneidenden Scheibe radial gestaucht und die Scheibe in der Messerhülse eingeklemmt und gegen Ausfallen aus der Messerhülse in das Kunststoffrohr zuverlässig gehalten. Insbesondere wird durch das keilförmige Zuschleifen der Schneidkanten das Entstehen eines Spans aus dem Mantelmaterial vermieden. Der Keilwinkel der Schneiden liegt vorteilhafterweise zwischen 30° und 60°.

Ein gegen eine senkrecht zur Drehachse stehende Ebene schräger Verlauf der Stirnkante der Messerhülse insbesondere in einem einer Schneidkante nacheilendem Abschnitt vereint die vorteilhaften Eigenschaften, zum einen eine Druckkraft parallel zur Drehachse der Messerhülse in Richtung des Kunststoffrohrs zu vermeiden oder gering zu halten, da die Stirnkante der Messerhülse in der von der Schneidkante geschnittenen Furche im Kunststoff läuft, ohne übermäßig auf den Grund der Furche zu drücken, und zum anderen dennoch eine ausreichend große Anlagefläche der Innenmantelfläche zu dem ausgeschnittenen Teil der Kunststoffscheibe zu bieten, um ein sicheres Halten der ausgeschnittenen Scheibe zu gewährleisten.

Die erfindungsgemäße Schneidvorrichtung kann vorteilhafterweise werkzeuglos handhabbar sein. Vorzugsweise ist die Schneidvorrichtung aus der Gewindehülse der auf dem Kunststoffrohr befestigten Manschette entnehmbar und so in verschiedenen derartigen Manschetten immer wieder verwendbar. Zur Entfernung der in der Messerhülse gehaltenen, ausgeschnittenen Kunststoffscheibe weist die Vorrichtung vorteilhafterweise eine axial durchgehende Öffnung aus, durch welche mittels eines Stabs oder dergleichen die gehaltene Kunststoffscheibe ausgedrückt werden kann. Die durchgehende Öffnung kann auch axial von der Stirnkante der Messerhülse beabstandet eine Querschnittserweiterung aufweisen, so dass geschnittene Scheiben bei folgenden Schneidvorgängen von der Stirnkante weg geschoben werden und von selbst durch den Griff ausfallen können.

Die Erfindung ist nachfolgend anhand bevorzugter Ausführungsbeispiele unter Bezugnahme auf die Abbildungen noch eingehend veranschaulicht. Dabei zeigt:
- Fig. 1: einen Schnitt durch eine Manschette mit einer Schneidvorrichtung,
- Fig. 2: eine teilweise in ein Kunststoffrohr eingedrungene Messerhülse,
- Fig. 3: eine axiale Ansicht entlang A - A von Fig. 2.

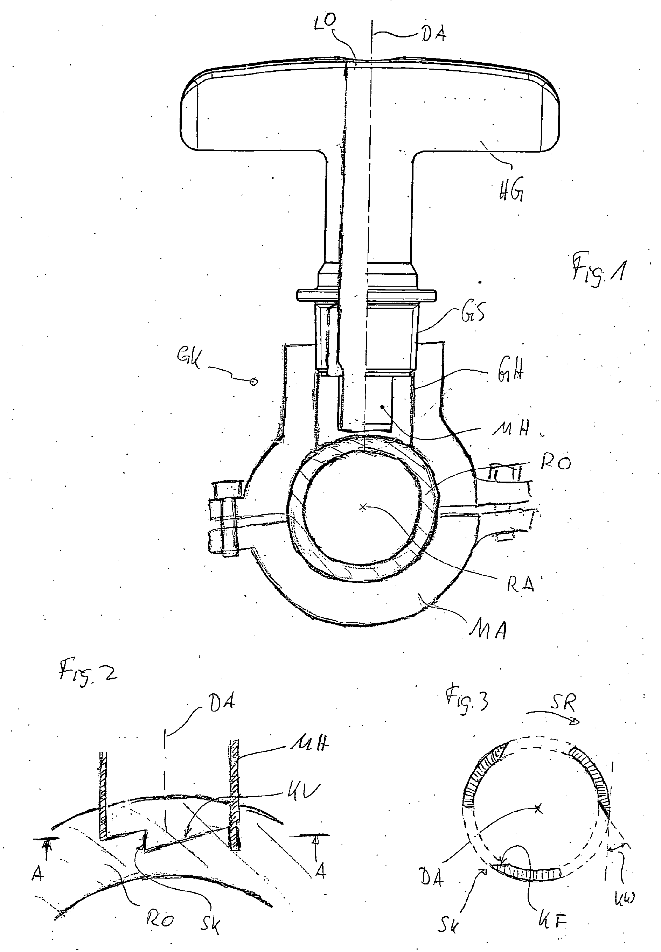

Bei der in Fig. 1 skizzierten Anordnung ist in an sich bekannter Weise eine Ringmanschette MA um ein Kunststoffrohr RO gelegt und z. B. durch Verschrauben auf diesem festgeklemmt. Die Ringmanschette trägt einen Grundkörper GK, welcher eine Gewindehülse GH enthält. Die Drehachse DA des Hülsengewindes ist im wesentlichen senkrecht zur in der skizzierten Ansicht senkrecht zur Zeichenebene verlaufenden Rohrachse RA ausgerichtet.

Eine Schneidvorrichtung SV mit einem Handgriff HG, einem Gewindeschaft GS und einer Messerhülse MH ist mit dem Schaftgewinde in dem Hülsengewinde der Gewindehülse GH um die Drehachse DA drehbar geführt. Gewindeschaft GS und Messerhülse sind drehfest miteinander verbunden. Über dem Handgriff HG kann die Schneidvorrichtung mit geringem Kraftaufwand werkzeuglos benutzt werden. Der Durchmesser der Messerhülse ist geringer als der Rohrdurchmesser. Die Messerhülse ist vorzugsweise metallisch und kann z.B. mit dem Gewindeschaft GS, welcher vorteilhafterweise mit dem Handgriff einstückig als Kunststoffteil ausgeführt ist, durch Einpressen verbunden sein.

Ein Drehen des Handgriffs HG um die Drehachse DA bewirkt eine Drehung und über die Gewindeführung gleichzeitig eine axiale Verschiebung der Messerhülse in Richtung der Drehachse. Die Messerhülse kann so bei Drehen in einer Schneid-Drehrichtung gleichzeitig auf das Rohr zu verschoben werden und schneidet dabei mit der dem Rohr zugewandten Stirnkante in das Rohr ein. Nach vollständigem Durchschneiden des Rohrs ist eine kreisrunde Öffnung in dem Rohrmantel eingeschnitten und die entsprechend ausgeschnittene Kunststoffscheibe ist innerhalb der Messerhülse festgeklemmt und kann durch Zurückdrehen der Schneidvorrichtung zusammen mit der Messerhülse aus der Öffnung im Rohrmantel zurückgezogen werden und die Rohröffnung freigeben. Die Schneidvorrichtung kann vorteilhafterweise vollständig aus dem Grundkörper entnommen und durch eine Anschlussarmatur ersetzt werden. Das Rohr RO kann beispielsweise Teil einer Bewässerungsanlage sein, an welche mittels der Manschette und der Schneidvorrichtung nachträglich an beliebiger Stelle ein Verbraucher, beispielsweise ein Tropfer oder Sprinkler, oder eine Leitungsverzweigung angeschlossen werden kann.

Die Messerhülse weist entlang des Umfangs ihrer dem Rohr zugewandten Stirnkante eine Struktur mit mehreren Schneiden und Klemmabschnitten auf. Vorzugsweise sind die mehreren Schneiden um gleiche Winkel um die Drehachse DA gegeneinander versetzt angeordnet. Die Anzahl der Schneiden ist vorteilhafterweise nicht größer als sechs. Vorzugsweise sind zwei bis vier, insbesondere wie im skizzierten Beispiel drei Schneiden vorgesehen. Die Schneidkanten SK der Schneiden verlaufen parallel oder zumindest überwiegend parallel zur Drehachse DA, wie aus Fig. 2 ersichtlich. Die Fig. 2 ist in durch axiale Überhöhung verzerrtem Maßstab gezeichnet. Vorteilhafterweise liegen die Schneidkanten innerhalb der Wanddicke der Messerhülse MH näher bei der Außenwand der Messerhülse und sind vorzugsweise durch die Außenwand und eine gegen Radius und Tangente geneigte Keilfläche KF gebildet, wie in der axialen Ansicht nach Fig. 3 skizziert. Der Keilwinkel KW zwischen der Schrägfläche KF und der Tangente an die Außenwand des Rohres liegt vorteilhafterweise zwischen 30° und 60°, vorzugsweise bei ca. 45°. Hierdurch wird der radial innerhalb der Schneidkante liegende Kunststoff entlang einer von der Schneidkante geschnittenen Furche radial bis zur Innenwand nach innen gedrückt und so vorteilhaft in der Messerhülse radial geklemmt. Die Ausbildung von zumindest überwiegend zur Drehachse parallelen Schneidkanten führt vorteilhafterweise zu Schneidkräften mit vorwiegend zur Rohrmantelfläche parallelem Kraftverlauf und vermeidet das Eindrücken des Rohrmantels. Späne entstehen dabei im Regelfall nicht und es wird kein Rohrmaterial ausgeschält, so dass der unkomprimierte Durchmesser der ausgeschnittenen Scheibe im wesentlichen gleich dem Außendurchmesser der Schneidhülse und die Scheibe durch radiales Komprimieren auf den Innendurchmesser der Schneidhülse klemmend in der Hülse gehalten ist.

In Schneid-Drehrichtung SR gegenüber den Schneidkanten nacheilend und an diese anschließend weist die Messerhülse Klemmabschnitte auf, in welchen die Stirnkante der Messerhülse einen gegen eine senkrecht zur Drehachse liegende Ebene schrägen, gegenüber der zum Innern des Rohres weisenden Spitze der jeweiligen Schneidkante SK axial vom Rohr RO weg gerichteten Verlauf KV zeigt. Der Verlauf KV der Stirnkante ragt vorzugsweise in Richtung des Rohrinneren nicht oder nicht wesentlich über eine der Spitze der Schneidkante nachlaufende gedachte Wendellinie hinaus, welche dieselbe Ganghöhe wie die Wendeln von Gewindehülse GH und Gewindeschaft GS aufweist. Auf diese Weise wird vermieden, dass die Stirnkante der Messerhülse in dem Verlauf KV auf den Grund der von der in Schneid-Drehrichtung vorauseilend liegenden Schneidkante geschnittenen Furche drückt und die Rohrwandung nach innen eindrückt. Vorteilhafterweise liegt der zu einer Schneidkante bezüglich der Schneid-Drehrichtung nacheilende Verlauf KV der Stirnkante zumindest überwiegend zwischen der genannten gedachten Wendellinie und einer hierzu parallelen weiteren Wendellinie, welche gegen die erstgenannte, um maximal den N-ten Teil einer Ganghöhe mit N als Zahl der Schneidkanten von dem Rohr weg gerichtet axial versetzt verläuft. Vorzugsweise folgt der Verlauf KV der Stirnkante in den Klemmabschnitten im wesentlichen der erstgenannten gedachten Wendellinie. Auf diese Wiese wird eine besonders gute Führung der Messerhülse in der geschnittenen Furche und eine besonders zuverlässige radiale Klemmung der aus dem Rohr RO ausgeschnittenen Kunststoffscheibe KS erreicht.

Eine ausgeschnittene und in der Messerhülse klemmend gehaltene Kunststoffscheibe kann vorteilhaft durch Einführen eines Stabes oder dgl. in die axial durchgehende Öffnung LO von der Seite des Handgriffs her ausgestoßen werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Vorrichtung zum Schneiden einer Kreisöffnung in ein Kunststoffrohr, mit einem Gewindeschaft (GS), welcher in eine auf dem Rohr befestigte Gewindehülse (GH) einsetzbar ist, und mit einer kreiszylindrischen Messerhülse (MH), wobei durch Drehen der in die Gewindehülse eingesetzten Vorrichtung die Messerhülse in einer Schneid-Drehrichtung (SR) gedreht und in Richtung der Rohrachse (RA) verschoben wird, **dadurch gekennzeichnet, dass** die Messerhülse (MH) an ihrer Stirnkante wenigstens eine in Drehrichtung (SR) weisende Schneide mit zur Drehachse annähernd paralleler Schneidkante (SK)aufweist und in Schneid-Drehrichtung zu der Schneide nacheilend einen axial zurückweichenden Verlauf (KV) aufweist.

2. Vorrichtung nach Anspruch 1, **dadurch gekennzeichnet, dass** die Schneide mit radial außenliegender Schneidkante und innenliegender Schräge (KF) ausgeführt ist.

3. Vorrichtung nach Anspruch 1 oder 2, **dadurch gekennzeichnet, dass** der zurückweichende Verlauf (KV) zumindest annähernd dieselbe Wendelsteigung aufweist wie das Gewinde des Gewindeschafts.

4. Vorrichtung nach einem der Ansprüche 1 bis 3, **dadurch gekennzeichnet, dass** mehrere Schneidkanten (SK) um die Drehachse (DA) winkelversetzt zueinander angeordnet sind.

5. Vorrichtung nach einem der Ansprüche 1 bis 4, **dadurch gekennzeichnet, dass** der Messerhülse axial abgewandt ein Handgriff angeordnet ist.

6. Vorrichtung nach einem der Ansprüche 1 bis 5, **dadurch gekennzeichnet, dass** eine zur Drehachse parallele axial durchgehende Öffnung vorhanden ist.
